# EUROPÄISCHE PATENTSCHRIFT

(11) **EP 0 600 150 B1**
(45) Veröffentlichungstag und Bekanntmachung des Hinweises auf die Patenterteilung: **06.08.1997**
(21) Anmeldenummer: 93109914.7
(22) Anmeldetag: 22.06.1993
(51) Int. Cl.: F16K 31/68, G05D 23/13

(54) **Thermostatisches Ventil**
Thermostatic valve
Soupape thermostatique

(30) Priorität: 03.12.1992 DE 9216490 U
(43) Veröffentlichungstag der Anmeldung: 08.06.1994
(73) Patentinhaber: Gustav Wahler GmbH u. Co, D-73730 Esslingen (DE)
(72) Erfinder: Peuker, Thomas, D-7300 Esslingen (DE)
(74) Vertreter: Kratzsch, Volkhard, Dipl.-Ing.

(56) Entgegenhaltungen:
- DE-A- 2 003 445
- DE-B- 2 109 326
- DE-U- 1 903 834
- DE-U- 7 235 899
- DE-U- 8 801 797
- US-A- 2 921 366

## Beschreibung

Die Erfindung bezieht sich auf ein thermostatisches Ventil der im Oberbegriff des Anspruchs 1 definierten Art. Es ist ein thermostatisches Ventil dieser Art bekannt (DE-U-88 01 797), bei dem die öffnung im jeweiligen Kurzsteg aus einer im vertikalen Schnitt etwa einem liegenden U entsprechenden Aussparung auf der Innenseite des Kurzsteges gebildet ist. Das Widerlager hat an den beiden gegenüberliegenden Schenkeln als endseitige Befestigungsglieder in bezug auf den vertikal verlaufenden Schenkelteil davon etwa rechtwinklig nach außen abgebogene Enden mit seitlich abgekröpften Laschen, die jeweils einen seitlich an dem durch die Aussparung gebildeten, darunter verlaufenden Steg angebrachten Ansatz umgreifen. Die umgebogenen Enden der Schenkel liegen auf den die Aussparungen unterseitig begrenzenden Stegen auf. Der jeweilige etwa vertikal verlaufende Schenkel des Widerlagers erstreckt sich mit Querabstand vom jeweiligen Kurzsteg und verläuft mit seitlichem Abstand neben dem jeweiligen Kurzsteg. Infolgedessen ist das Widerlager hinsichtlich seiner Schenkel auf Biegung beansprucht. Auch dort, wo die umgebogenen Enden der Schenkel an den Stegen der jeweiligen Kurzschenkel aufliegen, wirken Biegemomente. Diese sind vor allem dann von Nachteil, wenn der Gehäuseteil aus Kunststoff hergestellt wird; denn Kunststoffmaterial neigt bei der doppelten Belastung durch die hohe Temperatur und durch den Kontakt mit Kühlwasser aufgrund seines hygroskopischen Verhaltens zum Kriechen und damit zu Formänderungen, insbesondere Längenveränderungen im Bereich parallel zur Längsmittelachse des Thermostatelementes. Derartige Längenänderungen haben den Nachteil, daß sich dadurch der Arbeitsbereich des Thermostatelements und somit der Arbeitsbereich des Ventils unerkannt verändert. Außerdem führt ein Kriechverhalten beim aus Kunststoff bestehenden Gehäuseteil auf Dauer zu Beschädigung oder gar zu Bruch mit völliger Untauglichkeit des thermostatischen Ventils.

Bei einem anderen thermostatischen Ventil (DE-A-2 109 326) sind die endseitigen Befestigungsglieder der beiden Schenkel des Widerlagers ebenfalls zu horizontalen Laschen umgebogen, die in solche Öffnungen eingreifen können, die in vertikal gerichteten, mit dem Gehäuseteil einstückigen Laschen vorhanden sind, wobei der Eingriff entweder von innen nach außen oder von außen nach innen geschieht. Auch bei diesem Ventil sind die Schenkel des Widerlagers auf Biegung beansprucht, wodurch auch entsprechende Teile des Gehäuseteils durch Biegemomente belastet sind.

Bei einem anderen bekannten thermostatischen Ventil (DE-U-19 03 834) besteht das Widerlager im wesentlichen aus einem Querriegel, dessen Enden in Öffnungen von vertikal gerichteten Armen des Gehäuseteils eingreifen und somit ebenfalls auf Biegung beansprucht sind, was gleichermaßen auch für die Arme des Gehäuseteils gilt.

Bei einem anderen bekannten thermostatischen Ventil (DE-U-72 35 899) ist das Widerlager als in Seitenansicht etwa kegelstumpfförmiger Korb ausgebildet, der insgesamt vier Schenkel aufweist, die gegeneinander abgestützt sind. Am Ende der Schenkel ist als Befestigungsglied eine Querschnittsverdickung vorgesehen, die in entsprechende Hinterschnittöffnungen des Gehäuseteils eingreift, die auf Höhe des Ventilsitzes in einem Ringteil des Gehäuseteils enthalten sind. Dieses Ventil ist hinsichtlich des Widerlagers aufwendig. Auch ist dessen Montage umständlich. Auch hier ist das Widerlager hinsichtlich seiner Schenkel auf Biegung beansprucht. Auch dort, wo die endseitigen Befestigungsglieder in hinterschnittförmige Aufnahmen im Ringteil des Gehäuseteils eingreifen, wirken aufgrund der durch Biegemomente belasteten Schenkel ebenfalls Biegemomente. Somit hat auch dieses Ventil die eingangs dargelegten Nachteile.

Der Erfindung liegt die Aufgabe zugrunde, ein thermostatisches Ventil der eingangs genannten Art zu schaffen, das die genannten Nachteile vermeidet und insbesondere bei der Gestaltung des Gehäuseteiles aus Kunststoff eine hohe Formbeständigkeit und Dauerfestigkeit des Gehäuseteiles ohne Veränderung des Arbeitsbereiches des Ventils gewährleistet.

Die Aufgabe ist bei einem thermostatischen Ventil der eingangs genannten Art erfindungsgemäß durch die Merkmale im Anspruch 1 gelöst. Durch die Gestaltung als Kurzstege geringer Länge mit Durchlässen für die Befestigungsglieder jedes Schenkels darin lassen sich Biegebeanspruchungen durch Biegemomente sowohl im Bereich des Gehäuseteils, insbesondere der Kurzstege, als auch im Bereich der Schenkel des Widerlagers ausschließen. Ferner sind die Voraussetzungen dafür geschaffen, daß in den Kurzstegen und den Schenkeln des Widerlagers nur noch Zugkräfte wirksam sind und somit nur ein einachsiger Spannungszustand vorherrscht, was die Formbeständigkeit und Dauerfestigkeit des Gehäuseteils, insbesondere der Kurzstege, vor allem bei der Gestaltung aus Kunststoff wesentlich steigert. Zu einem nur einachsigen Spannungszustand tragen auch die Merkmale bei, wonach der Rinnengrund der Kurzstege etwa auf der Längslinie verläuft, auf der die den jeweiligen Schenkel und Kurzsteg belastenden Zugkräfte wirksam sind, und wonach der jeweilige Schenkel als Flachstreifen ausgebildet ist und auf der Längslinie verläuft, auf der die Zugkräfte wirksam sind. Dadurch sind etwaige Biegemomente gänzlich ausgeschaltet. Von Vorteil ist ferner, daß die Kurz stege in Richtung etwa parallel zur Längsmittelachse des Thermostatelements und in Umfangsrichtung möglichst klein und schmal gestaltet sind und dennoch ausreichende Festigkeit durch das besondere Querschnittsprofil aufweisen. Auf diese Weise ist die durch die Kurz stege bedingte Reduzierung des Strömungsquerschnittes bei geöffnetem Ventil für das hindurchströmende Medium außerordentlich gering. Von Vorteil ist ferner, daß das Widerlager kostengünstig, leicht und querschnittsdünn hinsichtlich seiner einzelnen Elemente gestaltet ist. Es ermöglicht dadurch zum einen einen schnellen und einfachen Zusammenbau des thermostatischen Ventiles und führt zum anderen hinsichtlich des Widerlagers ebenfalls dazu, daß die dadurch bedingte Reduzierung des Durchströmquerschnittes vernachlässigbar gering, zumindest so gering wie irgend möglich, ist.

Vorteilhafte weitere Erfindungsmerkmale und Ausgestaltungen ergeben sich aus den Ansprüchen 2 bis 11. Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: einen schematischen senkrechten Schnitt mit teilweiser Seitenansicht eines thermostatischen Ventils,
- Fig. 2: eine Draufsicht des Ventils in Fig. 1,
- Fig. 3: einen schematischen Schnitt mit teilweiser Seitenansicht des Widerlagers mit zwei abstrebenden Schenkeln und endseitigen Befestigungsgliedern des Ventils in Fig. 1,
- Fig. 4: eine Draufsicht des Widerlagers in Fig. 3 in Pfeilrichtung IV,
- Fig. 5: eine Seitenansicht des Widerlagers in Pfeilrichtung V in Fig. 3,
- Fig. 6: einen schematischen vergrößerten Schnitt in Pfeilrichtung VI-VI in Fig. 1 eines Kurzsteges am Gehäuseteil des Ventils.

In den Zeichnungen ist ein thermostatisches Ventil 10 gezeigt, das in seiner Gestaltung demjenigen gemäß DE-GM 72 35 899 ähnelt, jedoch mit besonderen, nachfolgend im Detail erläuterten Unterschieden.

Das Ventil hat einen Gehäuseteil 41, der z.B. aus einem Deckelteil 42 besteht, der einen damit einstückigen Rohransatz 43 zum Anschluß einer Leitung aufweist. Der Gehäuseteil 41, insbesondere Deckelteil 42, weist einen unterseitigen Ringteil 44 auf, der mit einer Abschrägung 45 versehen und dadurch etwa schneidenförmig gestaltet ist.

Der Ringteil greift bei Befestigung des Gehäuseteils 41 an einem nicht weiter gezeigten Gehäuse in eine Gehäuseöffnung ein, wobei zwischen dem Ringteil 44, insbesondere der Abschrägung 45, und dem nicht sichtbaren Gehäuse bedarfsweise weise ein nicht gezeigter Dichtungsring, z.B. O-Ring, angeordnet werden kann.

Der Gehäuseteil 41 enthält etwa auf Höhe des Ringteiles 44 eine Ventilöffnung 46, die von einem ringförmigen Ventilsitz 47 umgeben ist.

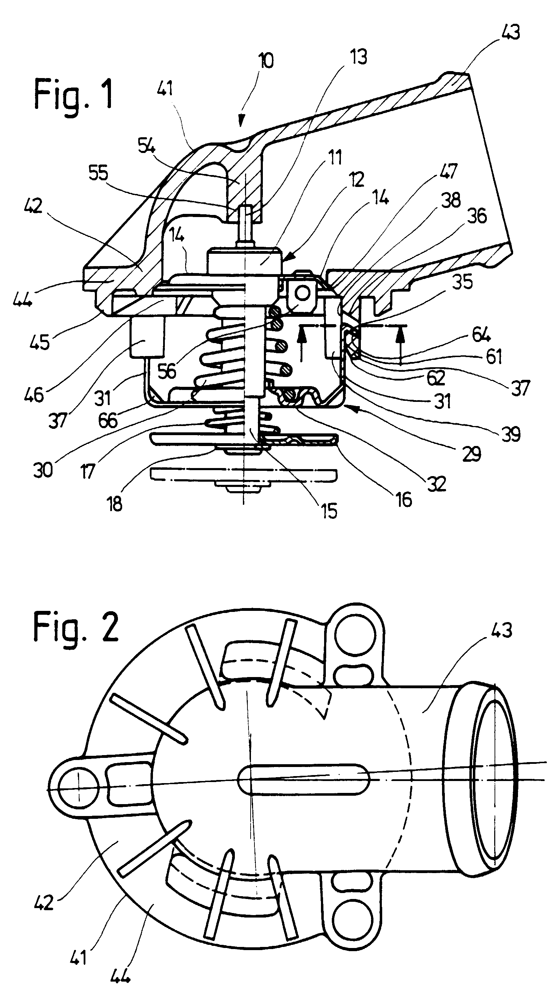

Das Ventil 10 weist ferner ein Thermostatelement 12 auf, das z.B. als Dehnstoffelement ausgebildet ist und ein Gehäuse 11 mit darin enthaltenem, bei Temperaturerhöhung sich ausdehnendem Dehnstoff, z.B. Wachs, aufweist, wobei in das Gehäuse 11, insbesondere in den darin enthaltenen Dehnstoff, ein Kolben 13 eintaucht, der relativ zum Gehäuse 11 verschoben wird. Das Thermostatelement 12 trägt auf seinem Gehäuse 11, und zwar auf einem Ringabsatz, einen Ventilteller 14, der mit dem Ventilsitz 47 im Gehäuseteil 41 zur Steuerung der Ventilöffnung 46 zusammenwirkt. Ist der Ventilteller 14 in Fig. 1 nach unten bewegt worden, so hat er vom Ventilsitz 47 abgehoben, so daß der Durchlaß durch die Ventilöffnung 46 freigegeben ist. Auf einem unteren Abschnitt 15 des Gehäuses 11 des Thermostatelementes 12 ist relativ verschiebbar ein zweiter Ventilteller 16 geführt, der mittels einer Feder 17 gegen einen Anschlagring 18 am Abschnitt 15 gedrückt wird und von letzterem gehalten ist. Der zweite Ventilteller 16 ist Teil eines herkömmlichen Bypaßventiles, das keiner besonderen Beschreibung bedarf.

Der Gehäuseteil 41, insbesondere Deckelteil 42, weist im Inneren einen damit vorzugsweise einstückigen, zum Thermostatelement 12 etwa koaxialen Zapfen 54 od.dgl. Vorsprung auf, der von der in Fig. 1 oberen Wand des Deckelteils 42 nach unten führt. Der gesamte Gehäuseteil 41, insbesondere Deckelteil 42, mitsamt dem Zapfen 54 besteht aus Kunststoff und ist als ingesamt einstückiges Kunststofformteil ausgebildet. Der Zapfen 54 enthält eine nach unten offene Bohrung 55, in die der verschiebbare Teil des Thermostatelements 12, insbesondere der Kolben 13, eingreift. Dadurch ist dieser verschiebbare Teil, insbesondere Kolben 13, am Gehäuseteil 41 abgestützt. Mit 56 ist schematisch ein in den Ventilteller 14 integriertes zusätzliches und an sich bekanntes Kugelventil angedeutet.

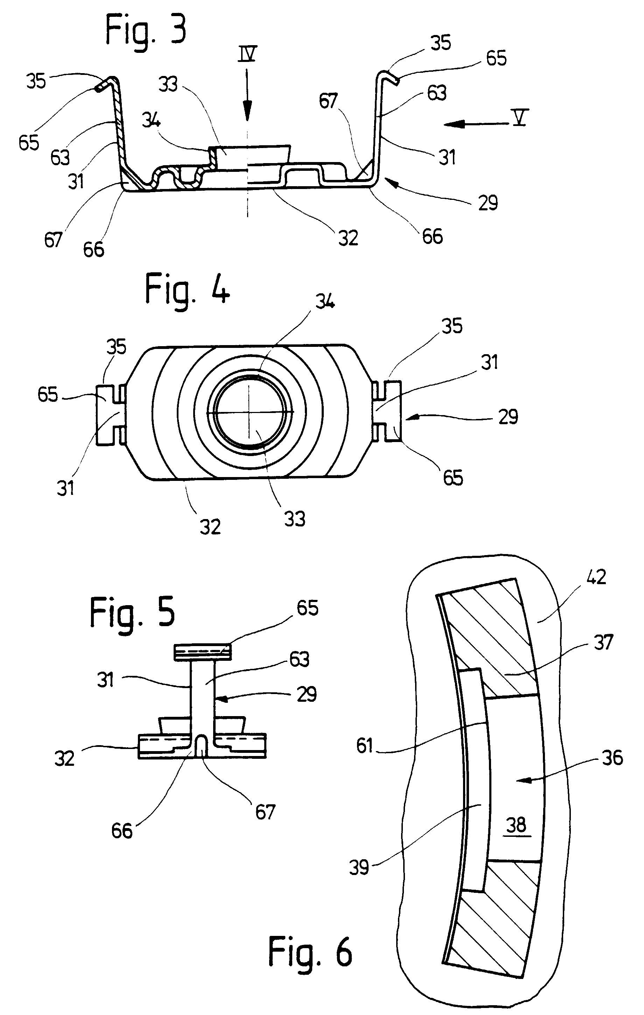

Der erste Ventilteller 14 ist von einer Rückstellfeder 30 beaufschlagt, die hier als z.B. kegelstumpfförmig gewickelte Schraubenfeder ausgebildet ist, die das Gehäuse 11 umgibt und mit ihrem in Fig. 1 oberen Ende an einem Ringabsatz des Gehäuses 11 endseitig abgestützt ist. Bei einem anderen, nicht gezeigten Ausführungsbeispiel ist die Rückstellfeder 30 mit ihrem oberen Ende direkt am Ventilteller 14 abgestützt. Das andere, in Fig. 1 unten befindliche Ende der Rückstellfeder 30 ist an einem besonderen Widerlager 29 abgestützt, das zwei einander z.B. diametral gegenüberliegende Schenkel 31 aufweist, die über ein unteres Basisteil 32 miteinander verbunden sind und zusammen mit diesem einen in Seitenansicht zumindest im wesentlichen U-förmigen Teil bilden. Der Basisteil 32 enthält im Zentrum eine Durchlaßöffnung 33, durch die sich das Gehäuse 11 hindurcherstreckt. Die Durchlaßöffnung 33 ist von einem Kragen 34 umgeben, der zugleich eine Führung für das Gehäuse 11 bildet. Jeder Schenkel 31 trägt am freien, in Fig. 1 und 3 nach oben gerichteten Ende ein damit einstückiges Befestigungsglied 35, das in eine zugeordnete Öffnung 36 des Deckelteils 42 eingreift.

Vom Gehäuseteil 41, insbesondere Deckelteil 42, strebt je Schenkel 31 mit Befestigungsglied 35 ein mit dem Gehäuseteil 41 einstückiger Kurzsteg 37 geringer Länge in Fig. 1 nach unten ab. Der Kurzsteg 37 ist-quer zu seiner Längserstreckung gemessen-als Schmalstreifen möglichst geringer Breite gestaltet. Deswegen und aufgrund der kurzen Länge wird durch die diametral gegenüberliegenden Kurzstege 37 der bei geöffnetem Ventil verfügbare Durchlaßquerschnitt so wenig wie möglich durch die hineinragenden Kurzstege 37 reduziert. Jeder Kurzsteg 37 enthält als Öffnung 36 einen etwa fensterartigen Durchlaß 38, der etwa als Umfangsschlitz gestaltet ist und in den das jeweilige Befestigungsglied 35 formschlüssig eingreift. Wie insbesondere aus Fig. 6 ersichtlich ist, enthält jeder Kurzsteg 37 eine im Querschnitt etwa U-förmig eingetiefte und in Längserstreckungsrichtung des Kurzsteges 37 verlaufende Rinne 39, innerhalb der das eingreifende Ende des jeweiligen Schenkels 31 verläuft. Beim gezeigten Ausführungsbeispiel befindet sich die jeweilige Rinne 39 vorzugsweise auf der Innenseite des jeweiligen Kurzsteges 37. Diese Lösung ist bevorzugt. Bei einem anderen, nicht gezeigten Ausführungsbeispiel kann die Rinne 39 statt dessen jedoch auch auf der gegenüberliegenden Außenseite jedes Kurzsteges 37 vorgesehen sein.

Die Rinne 39 ist in der Achsrichtung, die vom Ventilsitz 47 wegweist, also in Fig. 1 nach unten hin, offen, so daß von dieser offenen Seite her bei der Montage der jeweilige Schenkel 31 des Widerlagers 29 einfahren kann. Die Rinne 39 ist in der Achsrichtung, die zum Ventilsitz 47 hinweist, also in Fig. 1 nach oben hin, im Bereich oberhalb des etwa fensterartigen Durchlasses 38 geschlossen. Die U-Form jedes Kurzsteges 37 und sonstige Gestaltung dieses führt zu außerordentlich großer Festigkeit und Steifigkeit und Formtreue jedes Kurzsteges 37, der somit trotz hoher Temperatur des mittels des Ventiles 10 zu steuernden Mediums, z.B. Kühlwasser, und trotz hygroskopischen Verhaltens des Kunststoffes, aus dem der Gehäuseteil 41 insgesamt besteht, unter der herrschenden Belastung sich nicht verändert, insbesondere nicht verformt, insbesondere keine Längenänderung durch Kriechen od.dgl. erfährt. Die so gestalteten Kurzstege 37 genügen somit den gestellten Forderungen nach möglichst geringer Formänderung im Betrieb des Ventiles 10. Sie bieten außerodentlich hohe Festigkeit und sind gleichwohl in Achsrichtung des Thermostelements 12 gemessen sowie in Umfangsrichtung kurz und schmal, so daß durch die beiden Kurzstege 37 eine nur kleine und somit vernachlässigbare Reduzierung des Durchströmquerschnittes gegeben ist.

Der Rinnengrund 61 jeder Rinne 39 fällt am offenen Ende der Rinne 39 nach außen und unten schräg ab unter Bildung einer Einführschräge 62 (Fig. 1), die den jeweiligen Schenkel 31 mit endseitigem Befestigungsglied 35 bei der Montage unter Erleichterung der Montage nach innen ablenkt. Ein weiteres wesentliches Merkmal liegt darin, daß der Rinnengrund 61 etwa auf der zur Längsmittelachse des Thermostatelements 12 etwa parallelen Längslinie verläuft, auf der die Zugkräfte wirksam sind, die den jeweiligen Schenkel 31 und Kurzsteg 37 belasten.

Der jeweilige Schenkel 31 des Widerlagers 29 ist als Flachstreifen 63 ausgebildet und verläuft auf dieser Längslinie, auf der die Zugkräfte wirksam sind. Dadurch ist ein Hebelarm, mit dem die Zugkräfte wirken könnten, zu Null reduziert, so daß jegliche Biegemomente ausgeschaltet sind. Es ist somit ein einachsiger Spannungszustand erreicht, bei dem die beiden Kurzstege 37 und Schenkel 31 allein auf Zug unter der Wirkung der Rückstellfeder 30 belastet sind. Dies trägt zusätzlich zur großen Steifigkeit und Formbeständigkeit und Standfestigkeit der Kurzstege 37 im Betrieb und bei Belastung bei.

Der jeweilige etwa fensterartige Durchlaß 38 jedes Kurzsteges 37 ist - im Längsschnitt des Kurzsteges 37 gemäß Fig. 1 betrachtet - zumindest im unteren Bereich von einer Schrägfläche 64 begrenzt, die von oben nach unten und dabei von innen nach außen hin schräg abfällt. In entsprechender Zuordnung ist das jeweilige Befestigungsglied 35, das am Ende des jeweiligen Schenkels 31 einstückig damit vorgesehen ist, aus einem Haken 65 gebildet. Der Haken 65 ist nach außen gerichtet und fällt von oben nach unten und dabei nach außen hin schräg ab, wobei der Schrägverlauf etwa demjenigen der Schrägfläche 64 entspricht. Bei in den Durchlaß 38 eingreifendem Haken 65 liegt dieser auf der Schrägfläche 64 von oben her auf, wobei der Haken 65 unter der Wirkung der Rückstellfeder 30 in Fig. 1 nach unten gegen die Schrägfläche 64 angepreßt wird. Durch diesen Eingriff der Befestigungsglieder 35 in den Durchlaß 38 ist unter der Kraft der Rückstellfeder 30 eine feste formschlüssige Verbindung zwischen dem Widerlager 29 und den Kurzstegen 37 gewährleistet. Jeder Haken 65 ist breiter als der zugeordnete Schenkel 31, insbesondere Flachschenkel 63, wobei jeder Haken 65 z.B. mindestens doppelt so breit bemessen sein kann. Der Schenkel 31, insbesondere Flachschenkel 63, der einen nur geringen Querschnitt hat, führt somit auch zu einer vernachlässigbaren Reduzierung des Durchströmquerschnittes Aufgrund des breiteren Hakens 65, der in den Durchlaß 38 eingreift, ist eine Verdrehsicherung gewährleistet.

Das Widerlager 29 ist zusammen mit den Schenkeln 31 und den Befestigungsgliedern 35 aus einem einstückigen Metallteil, insbesondere Blechformteil,gebildet. Es ist zusammen mit den Schenkeln 31 als in Seitenansicht zumindest im wesentlichen U-förmiges Teil gestaltet. Dabei sind der die Basis bildende Basisteil 32 sowie der jeweilige Eckteil 66, der von dem Basisteil 32 zum jeweiligen Schenkel 31 überleitet, biegesteif gestaltet. Dadurch ist gewährleistet, daß sich weder der Basisteil 32 verformen, z.B. durchbiegen kann noch daß eine Verformung, z.B. Biegung, im Bereich der Eckteile 66, die einen etwa rechten Winkel gewährleisten, vorkommen kann. Hingegen ist der sich oberhalb des Eckteiles 66 erstreckende Abschnitt jedes Schenkels 31 mit Befestigungsglied 35, insbesondere Haken 65, daran etwa federelastisch zur Seite einfederbar und zurückfederbar ausgebildet. Die Biegesteifigkeit des Basisteiles 32 und der beiden Eckteile 66 kann in vielfältiger Weise verwirklicht werden. Beispielsweise ist der Basisteil 32 und/oder der jeweilige Eckteil 66 durch Sicken 67, herausgedrückte Materialvorsprünge, abgebogene Randstege od.dgl. versteift.

Bei der Montage werden das Dehnstoffelement 12 mit dem Widerlager 29 einschließlich der Rückstellfeder 30 vormontiert und dann am Gehäuseteil 41 angebracht, wobei der Kolben 13 in die Bohrung 55 des Zapfens 54 unter Abstützung daran eingreift und der Ventilteller 14 in den Bereich des Ventilsitzes 47 gelangt. Beim koaxialen Eindrücken des Thermostatelements 12 mit Widerlager 29 in den Gehäuseteil 41 greifen die beiden Schenkel 31 mit ihren freien Enden jeweils in die Rinne 39 des zugeordneten Kurzsteges 37 von unten her ein. Beim weiteren Einschieben erfolgt über die Einführschräge 62 eine Abbiegung der federelastisch gestalteten, oberhalb der Eckteile 66 sich erstreckenden Abschnitte jedes Schenkels 31 nach innen. Beim weiteren Einschieben bis zum Erreichen des jeweiligen Durchlasses 38 im Kurzsteg 37 schnappen die Haken 65 in den Durchlaß 38 ein, wobei die oberen Abschnitte der Schenkel 31 federelastisch in die in Fig. 1 gezeigte Stellung zurückfedern, in der die feste Verbindung hergestellt ist.

## Patentansprüche

1. Thermostatisches Ventil, mit einem Gehäuseteil (41), insbesondere Deckelteil (42), vorzugsweise mit Rohransatz (43) daran, der eine von einem Ventilsitz (47) umgebene Ventilöffnung (46) enthält, und mit einem zumindest einen Ventilteller (14) aufweisenden Thermostatelement (12), z. B. Dehnstoffelement, an dessen Gehäuse (11) der mindestens eine Ventilteller (14) gehalten ist und das mit einem relativ zum Gehäuse (11) verschiebbaren Teil, z. B. einem Kolben (13), am Gehäuseteil (41) abgestützt ist, wobei der Ventilteller (14) von einer Rückstellfeder (30) in Ventilschließrichtung beaufschlagt ist, die endseitig an einem Widerlager (29) abgestützt ist, das zwei gegenüberliegende und abstrebende Schenkel (31) aufweist, die jeweils mittels endseitiger Befestigungsglieder (35) in eine Öffnung (36) eines mit dem Gehäuseteil (41) einstückigen Kurzsteges (37) geringer Länge eingesetzt und darin formschlüssig gehalten sind,
**dadurch gekennzeichnet,**
daß die jeweilige Öffnung (36) aus einem etwa fensterartigen Durchlaß (38) besteht, daß jeder Kurzsteg (37) eine im Querschnitt etwa U-förmig eingetiefte und in Längserstreckungsrichtung des Kurzsteges (37) verlaufende Rinne (39) auf seiner Innenseite enthält, innerhalb der das eingreifende freie Ende des jeweiligen Schenkels (31) verläuft,wobei die Rinne (39) in der Achsrichtung, die vom Ventilsitz (47) wegweist, offen ist und in der Achsrichtung, die zum Ventilsitz (47) hinweist, oberhalb des etwa fensterartigen Durchlasses (38) geschlossen ist, daß der Rinnengrund am offenen Ende der Rinne (39) nach außen und unten schräg abfällt unter Bildung einer den jeweiligen Schenkel (31) mit endseitigem Befestigungsglied (35) bei der Montage nach innen ablenkenden Einführschräge (62), daß der Rinnengrund etwa auf der Längslinie verläuft, auf der die den jeweiligen Schenkel (31) und Kurzsteg (37) belastenden Zugkräfte wirksam sind,und daß der jeweilige Schenkel (31) als Flachstreifen (63) ausgebildet ist und auf der Längslinie, auf der die Zugkräfte wirksam sind, verläuft.

2. Thermostatisches Ventil nach Anspruch 1,
**dadurch gekennzeichnet,**
daß der jeweilige etwa fensterartige Durchlaß (38) - im Längsschnitt des Kurzsteges (37) betrachtet - zumindest im unteren Bereich von einer Schrägfläche (64) begrenzt ist, die von oben nach unten schräg verläuft.

3. Thermostatisches Ventil nach Anspruch 2,
**dadurch gekennzeichnet,**
daß die Schrägfläche (64) von innen nach außen hin schräg abfällt.

4. Thermostatisches Ventil nach einem der Ansprüche 1 bis 3,
**dadurch gekennzeichnet,**
daß der Gehäuseteil (41), insbesondere Deckelteil (42), mit den damit einstückigen Kurzstegen (37) aus Kunststoff besteht.

5. Thermostatisches Ventil nach einem der Ansprüche 1 bis 4,
**dadurch gekennzeichnet,**
daß das Widerlager (29) zusammen mit den Schenkeln (31) und deren Befestigungsglied (35) aus einem einstückigen Metallteil, insbesondere Blechformteil, gebildet ist.

6. Thermostatisches Ventil nach einem der Ansprüche 1 bis 5,
**dadurch gekennzeichnet,**
daß das Widerlager (29) zusammen mit den Schenkeln (31) als in Seitenansicht zumindest im wesentlichen U-förmiges Teil ausgebildet ist, wobei der die Basis des U bildende Basisteil (32) sowie der jeweilige Eckteil (66), der von dem Basisteil (32) zum jeweiliggen Schenkel (31) überleitet, biegesteif gestaltet sind, während der sich oberhalb des jeweiligen Eckteiles (66) erstreckende Abschnitt jedes Schenkels (31) mit dem Befestigungsglied (35) daran etwa federelastisch zur Seite einfederbar und zurückfederbar ausgebildet ist.

7. Thermostatisches Ventil nach Anspruch 1,
**dadurch gekennzeichnet,**
daß der Basisteil (32) und/oder der jeweilige Eckteil (66) durch Sicken (67), herausgedrückte Materialvorsprünge, umgebogene Randstege od.dgl. versteift ist.

8. Thermostatisches Ventil nach einem der Ansprüche 1 bis 7,
**dadurch gekennzeichnet,**
daß das Befestigungsglied (35) am Ende des jeweiligen Schenkels (31) aus einem Haken (65) gebildet ist.

9. Thermostatisches Ventil nach Anspruch 8,
**dadurch gekennzeichnet,**
daß der Haken (65) nach außen gerichtet ist und von oben nach unten und nach außen hin schräg abfällt.

10. Thermostatisches Ventil nach einem der Ansprüche 1 bis 9,
**dadurch gekennzeichnet,**
daß der jeweilige Kurzsteg (37) quer zu dessen Längserstreckung gemessen als Schmalstreifen geringer Breite gestaltet ist.

11. Thermostatisches Ventil nach einem der Ansprüche 8 bis 10,
**dadurch gekennzeichnet,**
daß der jeweilige Haken (65) breiter als der zugeordnete Schenkel (31), z.B. mindestens doppelt so breit, bemessen ist.

## Claims

1. Thermostatic valve, with a housing portion (41), particularly lid portion (42), preferably with pipe fitting (43) mounted thereon, which includes a valve opening (46) surrounded by a valve seat (47) and with a thermostatic element (12), e.g. expanding element, having at least one valve disc (14), the at least one valve disc (14) being held on the housing (11) of said element (12), and being supported by a part, e.g. a piston (13) displaceable relative to the housing (11) on the housing portion (41), the valve disc (14) being stressed by a restoring spring (30) in the valve closure direction, said restoring spring (30) being supported at the end on an abutment (29), which has two opposed and bracing arms (31) which are respectively inserted by means of terminal attachment members (35) in an opening (36) of a short web (37) of short length and integral with the housing portion (41), and are positively held therein, characterised in that the respective opening (36) consists of a roughly window-like passage (38), in that each short web (37) comprises on its inner side a groove (39) which is recessed in a roughly U-shape in cross-section, and extends in the longitudinal direction of the short web (37), and within which the engaging free end of the respective arm (31) extends, the groove (39) being open in the axial direction facing away from the valve seat (47), and being closed in the axial direction facing the valve seat (47) above the roughly window-like passage (38), in that the groove base inclines at the open end of the groove (39) outwards and downwards in an oblique direction, forming an insertion ramp (62) deflecting the respective arm (31) with terminal attachment member (35) inwards during assembly, in that the groove base extends roughly on the longitudinal line upon which the tension forces stressing the respective arm (31) and short web (37) are active, and in that the respective arm (31) is in the form of a flat strip (63) and extends on the longitudinal lines upon which the tension forces are active.

2. Thermostatic valve according to claim 1, characterised in that the respective, roughly window-like passage (38), seen in the longitudinal section of the short web (37), is restricted at least in the lower region by an oblique surface (64) which extends obliquely from the top downwards.

3. Thermostatic valve according to claim 2, characterised in that the oblique surface (64) inclines obliquely downwards from the inside to the outside

4. Thermostatic valve according to one of claims 1 to 3, characterised in that the housing portion (41), particularly lid portion (42), along with the short web (37) integral therewith, is made of plastic.

5. Thermostatic valve according to one of claims 1 to 4, characterised in that the abutment (29), together with the arms (31) and their attachment member (35), is formed from an integral metal part, particularly a sheet metal part.

6. Thermostatic valve according to one of claims 1 to 5, characterised in that the abutment (29), together with the arms (31), is formed, seen in side view, at least as a substantially U-shaped part, the base portion (32) forming the base of the U and the respective corner portion (66) which merges from the base portion (32) to the respective arm (31) being resistant to bending, while the portion of each arm (31) extending above the respective corner portion (66) with the attachment member (35) thereon may bend roughly resiliently to the side, and bend back into position.

7. Thermostatic valve according to claim 1, characterised in that the base portion (32) and/or the respective corner portion (66) is reinforced by beads (67), pressed-out metal projections, bent-over lateral webs or the like.

8. Thermostatic valve according to one of claims 1 to 7, characterised in that the attachment member (35) is formed at the end of the respective arm (31) as a hook (65).

9. Thermostatic valve according to claim 8, characterised in that the hook (65) is oriented outwards, and inclines obliquely from the top downwards and outwards.

10. Thermostatic valve according to one of claims 1 to 9. characterised in that the respective short web (37), measured transversely to its longitudinal extension, is in the form of a narrow strip of small width.

11. Thermostatic valve according to one of claims 8 to 10, characterised in that the respective hook (65) is wider than the associated arm (31), e.g. at least twice as wide.

## Revendications

1. Soupape thermostatique avec une pièce de boîtier (41), en particulier une pièce de couvercle (42), de préférence avec une tubulure (43) fixée sur celle-ci, qui comprend une ouverture de soupape (46) entourée d'un siège de soupape (47), et avec un élément thermostatique (12) qui présente au moins une tête de soupape (14), par exemple un élément en matière expansive, sur le boîtier (11) duquel au moins une tête de soupape (14) est maintenue et qui s'appuie sur la pièce de boîtier (41) avec une pièce pouvant coulisser par rapport au boîtier (11), par exemple un piston (13), la tête de soupape (14) étant alimentée par un ressort de rappel (30) dans la direction de fermeture de la soupape, ressort qui repose à l'extrémité sur une butée (29) qui présente deux branches (31) opposées et entretoisées qui sont introduites et maintenues par blocage respectivement à l'aide d'éléments de fixation (35) aux extrémités dans une ouverture (36) d'une entretoise courte (37) de faible longueur d'un seul tenant avec la pièce de boîtier (41), caractérisée en ce que l'ouverture respective (36) est composée d'un passage (38) sensiblement en forme de fenêtre, en ce que chaque entretoise courte (37) comprend une rigole (39) creusée dont la section transversale est sensiblement en forme de U et qui s'étend dans la direction de l'étendue longitudinale de l'entretoise courte (37) sur son côté intérieur, dans laquelle passe l'extrémité libre en prise de la branche respective (31), la rigole (39) étant ouverte dans la direction de l'axe qui s'éloigne du siège de soupape (47) et fermée dans la direction de l'axe allant vers le siège de soupape (47) au-dessus du passage (38) sensiblement en forme de fenêtre, en ce que le fond de la rigole sur le côté ouvert de la rigole (39) s'incline vers l'extérieur et vers le bas en formant une déclivité d'introduction (62) qui recourbe vers l'intérieur la branche respective (31) munie à ses extrémités d'un élément de fixation (35) lors du montage, en ce que le fond de la rigole passe sensiblement sur la ligne longitudinale sur laquelle agissent les forces de traction s'exerçant sur la branche (31) et l'entretoise courte (37) respectivement, et en ce que la branche respective (31) a la forme d'une bande plate (63) et passe sur la ligne longitudinale sur laquelle agissent les forces de traction.

2. Soupape thermostatique selon la revendication 1, caractérisée en ce que le passage respectif (38) sensiblement en forme de fenêtre - vu en coupe longitudinale de l'entretoise courte (37) - est délimité au moins dans la zone inférieure par une surface inclinée (64) qui est inclinée du haut vers le bas.

3. Soupape thermostatique selon la revendication 2, caractérisée en ce que la surface inclinée (64) est inclinée de l'intérieur vers l'extérieur.

4. Soupape thermostatique selon l'une quelconque des revendications 1 à 3, caractérisée en ce que la partie de boîtier (41), en particulier la partie de couvercle (42) est composée de matière plastique avec l'entretoise courte (37) d'un seul tenant avec celle-ci.

5. Soupape thermostatique selon l'une quelconque des revendications 1 à 4, caractérisée en ce que la butée (29) conjointement avec les branches (31) et leurs éléments de fixation (35), est formée d'une seule pièce métallique, en particulier une pièce usinée en tôle.

6. Soupape thermostatique selon l'une quelconque des revendications 1 à 5, caractérisée en ce que la butée (29) conjointement avec les branches (31) a la forme, au moins en vue latérale, d'une pièce essentiellement en forme de U, la pièce de base (32) formant la base du U ainsi que la pièce d'angle respective (66) qui relie la pièce de base (32) à la branche respective (31) ont une forme résistant à la flexion alors que le segment de chaque branche (31) avec l'élément de fixation (35) qui s'étend au-dessus de chaque pièce d'angle (66) est formé de façon à pouvoir sensiblement se rabattre sur le côté et à revenir élastiquement par déformation.

7. Soupape thermostatique selon la revendication 1, caractérisée en ce que la pièce de base (32) et/ou la pièce d'angle respective (66) est rigidifiée par sertissage (67), par des parties en saillie pressées du matériau, par des traverses de bordure recourbées ou similaires.

8. Soupape thermostatique selon l'une quelconque des revendications 1 à 7, caractérisée en ce que l'élément de fixation (35) est formé d'un crochet (65) sur l'extrémité de la branche respective (31).

9. Soupape thermostatique selon la revendication 8, caractérisée en ce que le crochet (65) est dirigé vers l'extérieur et qu'il est incliné du haut vers le bas et vers l'extérieur.

10. Soupape thermostatique selon l'une quelconque des revendications 1 à 9, caractérisée en ce que l'entretoise courte (37) respective, mesurée transversalement par rapport à son étendue longitudinale, a la forme d'une bande étroite de faible largeur.

11. Soupape thermostatique selon l'une quelconque des revendications 8 à 10, caractérisée en ce que le crochet respectif (65) est dimensionné plus large que la branche correspondante (31), par exemple au moins deux fois plus large.
